# EUROPEAN PATENT APPLICATION

(11) **EP 1 361 575 A2**
(43) Date of publication of application: **12.11.2003**
(21) Application number: 03005645.1
(22) Date of filing: 12.03.2003
(51) Int. Cl.: G11B 20/18

(54) **Replace processing method and replace processing apparatus**

(30) Priority: 08.05.2002 JP 2002133107
(71) Applicant: Kabushiki Kaisha Toshiba, Tokyo (JP)
(72) Inventor: Fukuchi, Katsumi, 1-chome, Minato-ku, Tokyo 105-8001 (JP)
(74) Representative: Henkel, Feiler, Hänzel

(57) **Abstract**

In a replace processing method according to an aspect of this invention, when an error has occurred due to the influence of a defective area during a continuous process of data by a predetermined command to have a predetermined recording destination as a target, the address of the defective area is stored (ST104), and the defective area is replaced by another area upon completion of the continuous data process corresponding to the predetermined command (ST113).

## Description

The present invention relates to a replace processing method which is used to cope with errors during recording or playback of data, based on an AV write or read command without any replace process. The present invention also relates to a replace processing apparatus which copes with any errors during recording or playback of data based on an AV write or read command without any replace process.

When PC data is read out from or written in an HDD (hard disk drive), a retrial is repeated until data can be normally read or written, upon occurrence of an error, so as to guarantee data reliability. To repeat the retrial, it takes 3 to 4 seconds. In order to read out or write PC data from or in the HDD, a PC read command or PC write command is used.

To read/write moving image/audio data, continuity is normally given priority over data reliability. Upon reading/writing moving image/audio data, an AV read command or AV write command is used. The AV read command and AV write command make it possible to set the upper limit of a retrial time, and to continue read/write access, with errors being ignored.

As described above, upon recording/playing back moving image/audio data using the AV read command and AV write command, it is difficult to attain both data continuity and reliability.

It is an object of the present invention to provide a replace processing method and replace processing apparatus, which can attain both data continuity and reliability upon recording/playing back moving image/audio data using an AV read command and AV write command.
(1) A replace processing method according to an aspect of the present invention comprises: storing, when an error occurs due to an influence of the defective area while data is continuously processed by a predetermined command to have a predetermined recording destination as a target, storing an address of the defective area; and replacing the defective area with another area upon completion of the continuous data process corresponding to the predetermined command.
(2) A replace processing apparatus according to an aspect of the present invention comprises:
   a processing unit configured to process data by a predetermined command to have a predetermined recording destination as a target; a storage unit configured to store, when an error occurs due to an influence of the defective area during the data process of the processing unit, an address of the defective area; and a replace process unit configured to replace the defective area with another area upon completion of the data process corresponding to the predetermined command.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram for explaining the overall arrangement of a digital video recording/playback apparatus (DVD video recorder) with an HDD according to an embodiment of the present invention;
FIG. 2 is a flow chart for explaining the overall operation of the apparatus shown in FIG. 1;
FIG. 3 is a flow chart for explaining an interrupt process in the apparatus shown in FIG. 1;
FIG. 4 is a flow chart for explaining a video recording process in the apparatus shown in FIG. 1;
FIG. 5 is a flow chart for explaining a playback process in the apparatus shown in FIG. 1;
FIG. 6 is a flow chart for explaining the contents (part 1) of a process executed upon cell playback in the process shown in FIG. 5;
FIG. 7 is a flow chart for explaining the contents (part 2) of a process executed upon cell playback in the process shown in FIG. 5;
FIG. 8 is a view for explaining the contents of management information (RTR_VMG) recorded by the apparatus shown in FIG. 1;
FIG. 9 is a flow chart for explaining a defect process compatible to an AV write command;
FIG. 10 is a flow chart for explaining defect process 1 compatible to an AV read command; and
FIG. 11 is a flow chart for explaining defect process 2 compatible to an AV read command.

A digital video recording/playback apparatus (DVD-RTR recorder) according to an embodiment of the present invention will be described hereinafter with reference to the accompanying drawings.

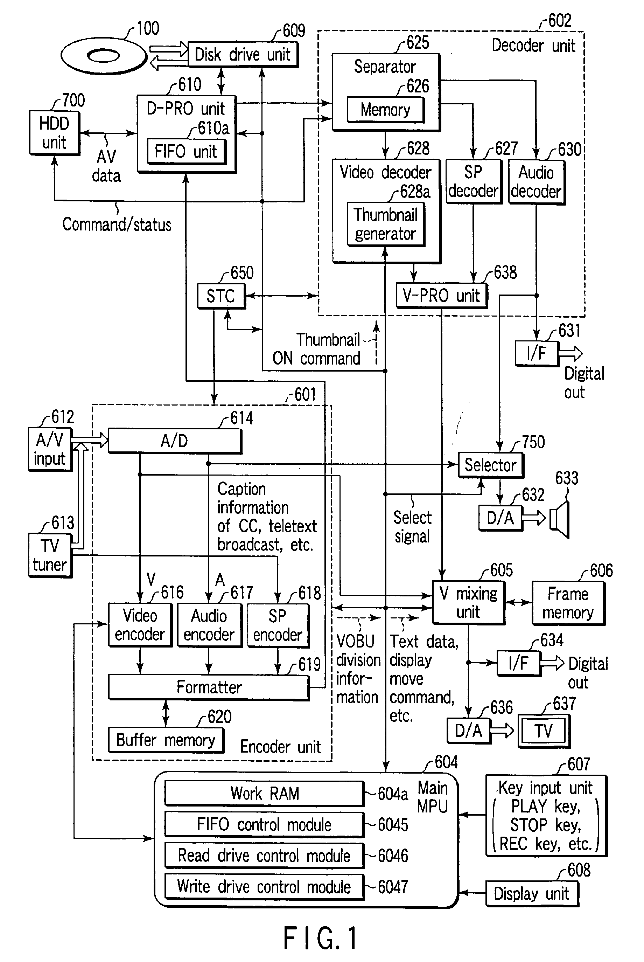

FIG. 1 is a block diagram for explaining the overall arrangement of a digital video recording/playback apparatus (DVD video recorder) with a hard disk drive HDD according to an embodiment of the present invention. This apparatus basically performs real-time video recording using a recordable optical disk (DVD-RAM disk, DVD-RW disk, DVD-R disk, or the like) 100 and/or a hard disk, and also has a playback function of a read-only optical disk (DVD-ROM disk, recorded DVD-R disk). Also, this apparatus has a function of implementing time slip viewing, using the high-speed access performance of the HDD and a DVD-RAM drive. Time slip viewing is a function of playing back a program or the like while video recording is in progress.

The apparatus shown in FIG. 1 comprises an encoder unit 601, decoder unit 602, main MPU (microcomputer; or central processing unit (CPU)) 604, V (video) mixing unit 605, frame memory 606, key input unit 607, display unit 608, DVD-RAM (and/or DVD-R/DVD-RW) drive unit 609, D-PRO (data processor) unit 610, A/V input 612, TV tuner (BS/terrestrial analog tuner) 613, audio digital I/F 631, audio D/A unit 632, loudspeaker 633 (an audio amplifier used to drive that loudspeaker is not shown), video digital I/F 634, TV D/A unit 636, external monitor TV 637, STC (system time counter) unit 650, HDD unit (e.g., an HDD recorder unit of around 20GB to 100GB and/or a large-capacity IC memory) 700, audio signal selector unit 750, and the like.

The D-PRO unit 610 comprises an internal or external FIFO (first-in, first-out) unit (FIFO buffer) 610a of a FIFO format. The FIFO buffer which forms this FIFO unit 610a includes a recording FIFO and playback FIFO. I/O control and the remaining amount monitor of these recording and playback FIFOs are implemented by a control program named a FIFO control module 6045 written in a program ROM in the main MPU 604.

The recording and playback FIFOs are obtained by, e.g., proportionally dividing one FIFO buffer in accordance with the ratio between recording data and playback data. Hence, even when the total FIFO buffer size is constant, the sizes of the individual recording and playback FIFOs are variable. For example, if the FIFO buffer size is 4MB, and the recording rate is three times the playback rate, a 3MB buffer size can be assigned to the recording FIFO, and a 1MB buffer size can be assigned to the playback FIFO. If the rates have changed during recording/playback, and for example, the recording rate becomes 1/3 the playback rate, the buffer size of the recording FIFO can be reduced to 1MB, and that of the playback FIFO can be increased to 3MB. As a method of changing the proportional distribution ratio of the recording and playback FIFOs of the FIFO buffer in accordance with the rates, the following method is available. That is, an address pointer is set at the boundary between the recording and playback FIFOs, and this address pointer position is changed in accordance with the recording/playback rate, thus changing the proportional distribution ratio of the recording and playback FIFOs of the FIFO buffer.

If the FIFO buffer size is sufficiently large (e.g., 16MB), the sizes of the recording and playback FIFOs may be fixed (e.g., 8MB each).

Read control from the disk drive unit 609 (or HDD unit 700) is implemented by a control program named a read drive control module 6046 written in the program ROM in the main MPU 604. Also, write control to the disk drive unit 609 (or HDD unit 700) is implemented by a control program named a write drive control module 6047 written in the program ROM in the main MPU 604.

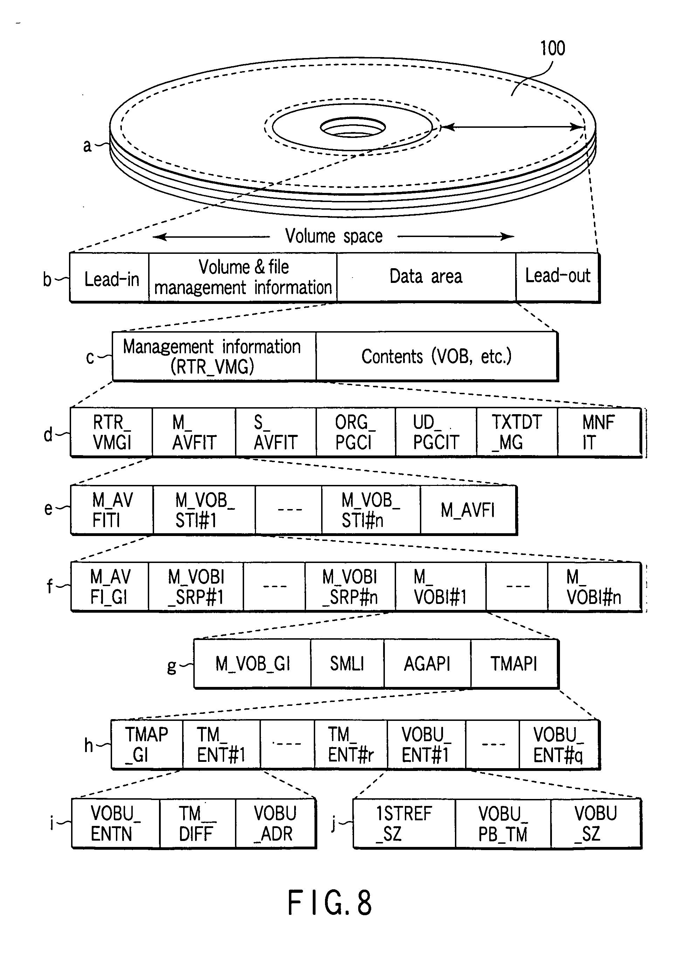

The main MPU 604 incorporates a ROM which includes the aforementioned control programs (firmware) and other control parameters, and a work RAM 604a used upon execution of each program. Note that the work RAM 604 includes a memory area named a VMG holding field (not shown) that temporarily stores management information (RTR_VMG) shown in FIG. 8.

The encoder unit 601 includes an A/D unit 614, a video encoder 616, an audio encoder 617 including a dual/mono header setting unit 617a, an SP (sub-picture) encoder 618, a formatter 619, and a buffer memory 620. The decoder unit 602 includes a separator 625 that incorporates a memory 626, a video decoder 628 that incorporates a reduced-scale image (thumbnail) generator 628a, an SP (sub-picture) decoder 627, an audio decoder 630, and a V-PRO (video processor) unit 638.

Video recording (recording of AV information) is attained by the disk drive unit (DVD-RAM drive unit) using an exchangeable (removable) DVD-RAM (or DVD-R/DVD-RW) disk 100 via the encoder unit 601. This disk drive unit 609 can play back not only a DVD-RAM (or DVD-R/DVD-RW) disk 100 but also a DVD video (or DVD-ROM) disk 100. That is, DVD-family disks are played back via the disk drive unit 609, D-PRO unit 610, and decoder unit 602. The functions upon DVD video playback can be basically the same as those of a commercially available DVD video player.

The flow of an actual video signal in the apparatus shown in FIG. 1 is as follows. An AV (audio/visual) signal obtained from the TV tuner 613 is input to the A/D unit 614, and is converted into a digital signal. The converted digital signal is input to the video encoder 616, and a digital audio signal is input to the audio encoder 617.

If text data of, e.g., teletext broadcast is output from the TV tuner 613 upon reception/video recording of terrestrial analog broadcast, such text data is input to the SP (sub-picture) encoder 618. Upon reception/video recording of terrestrial analog broadcast, an input video signal is temporarily converted into a digital signal by the A/D unit 614, and the digital signal is compressed by MPEG in the video (main picture) encoder 616. Also, an input audio signal is compressed by, e.g., MPEG audio in the audio encoder 617. Furthermore, input text data is compressed by runlength coding in the SP encoder 618.

The encoders 616 to 618 packetize data to form 2048 bytes if packets are packed, and input packetized signals (video data, audio data, and sub-picture data) to the formatter 619. The formatter 619 packs and multiplexes input packet data using the buffer memory 620 as needed, and sends multiplexed signals (video pack, audio pack, and sub-picture pack) to the D-PRO unit 610.

The D-PRO unit 610 forms an ECC block for every 16 packs/16 sectors in current DVD video (32 packs/32 sectors or more in next-generation DVD video), and appends error correction data to that block. The disk drive unit 609 records a data stream obtained in this way on an optical disk (DVD-RAM, DVD-RW, or DVD-R) 100 or in the HDD unit 700. If the disk drive unit 609 is busy since it is seeking or makes a track jump or the like, recording data may be temporarily stored in the HDD unit 700 (and/or a semiconductor memory (not shown)) to wait until the disk drive unit 609 is ready to record data.

Furthermore, the formatter 619 generates each separation information during video recording (in response to, e.g., a GOP start interrupt or the like), and periodically sends the generated separation information to the MPU 604. The separation information includes the number of packs in a VOBU (video object unit) as a data access unit, the end address of I-picture counted from the beginning of the VOBU, a VOBU playback time, and the like. Each VOBU can contain the aforementioned video packs, audio packs, and/or sub-picture packs. The disk drive unit 609 can access information recorded on a disk 100 to have a VOBU as a unit. Note that one video file is recorded per disk according to DVD-RTR (real-time video recording/playback DVD).

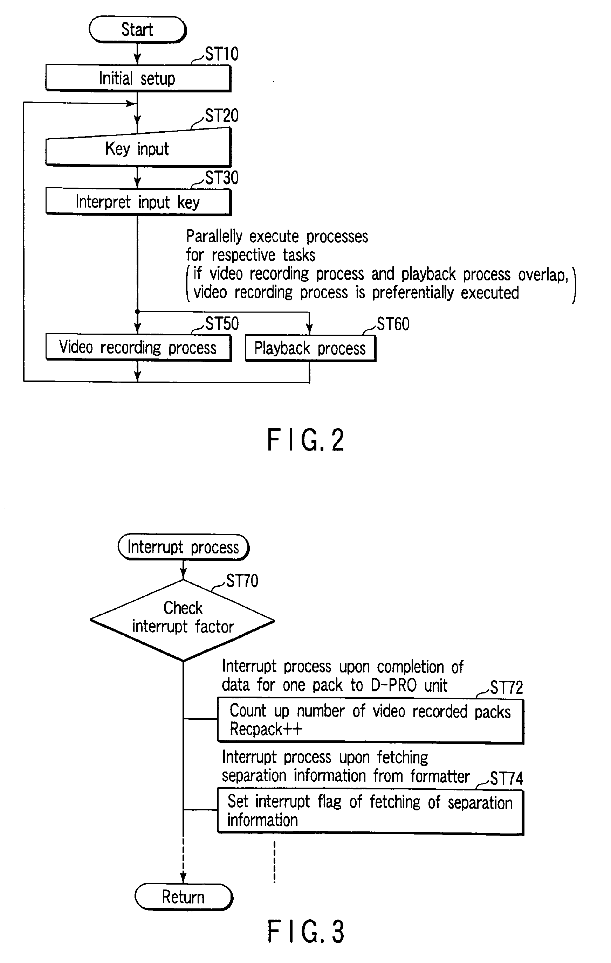

Various operations of the apparatus shown in FIG. 1 will be explained below with reference to the flow charts. FIG. 2 is a flow chart for explaining the overall operation of the apparatus shown in FIG. 1. Respective processes in this flow chart are controlled by the main MPU 604 in FIG. 1. The main MPU 604 executes a predetermined initial setup process (ST10) after the apparatus is started up. The main MPU 604 then waits for a user's key input (a key input from a remote controller (not shown) or an operation command from a video recording reservation program). Upon detection of the key input (ST20), the main MPU 604 interprets that key input (a switching command of a TV reception channel, video recording start command, playback start command, or the like) (ST30).

For example, if the interpretation result of the input key is a "video recording start command" during video recording, a video recording process on a recordable optical disk (DVD-RAM disk or the like) 100 loaded in the disk drive unit 609 and/or the HDD unit 700 is executed (ST50).

For example, if the interpretation result of the input key is a "playback start command" during playback, a playback process from an optical disk (DVD-RAM disk, DVD-RW disk, DVD-R disk, or DVD video disk) 100 loaded in the disk drive unit 609 is executed (ST60).

In the processes shown in FIG. 2, if the recording process on the disk 100 (or HDD unit 700) overlaps the playback process from the disk 100 (or HDD unit 700), the control unit (604) preferentially executes the recording process on the disk 100 (or HDD unit 700) (ST60 in FIG. 2 is executed in preference to ST50).

FIG. 3 is a flow chart for explaining an interrupt process in the apparatus shown in FIG. 1. If the control enters the interrupt process, since there are various interrupt factors, an interrupt factor is checked first (ST70). If the interrupt factor is, e.g., an "interrupt process upon completion of transfer for one pack to the D-PRO unit 610", an interrupt process Recpack++ (ST72) for counting up the number of video recorded packs is executed. On the other hand, if the interrupt factor is, e.g., an "interrupt process upon fetching separation information from the formatter 619", an interrupt flag for fetching of separation information is set (ST74). Although not shown, an interrupt flag for fetching of separation information x (x = 1, 2, 3,...) is set as needed. After the interrupt processes for various interrupt factors are done, the control returns to the flow of other processes.

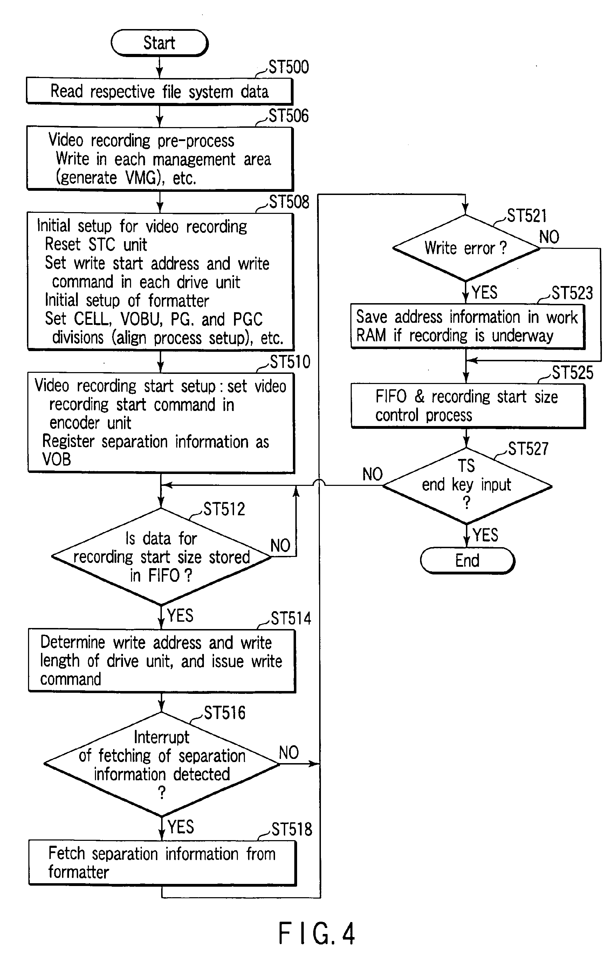

FIG. 4 is a flow chart for explaining a video recording process (recording of an MPEG program stream PS) in the apparatus shown in FIG. 1. The main MPU 604 reads respective file system data from a disk 100 loaded in the disk drive unit 609 (or HDD unit 700) (ST500). The main MPU 604 calculates the used disk size based on the read data, and checks if that disk 100 (or HDD unit 700) has a free space. If no free space is available, the main MPU 604 displays a warning message "no video recording space is available" or the like on the display unit 608 or TV 637, thus ending the process. If a free space is available, the main MPU 604 reads a management file (VMG file) from the disk 100 (or HDD unit 700). If no management file is found, the main MPU 604 generates a new VMG file, and maps it in the RAM 604a (ST506).

After such a video recording pre-process (ST506), the main MPU 604 starts a video recording initial setup process (ST508). In this video recording initial setup process, the main MPU 604 resets the STC unit 650, and sets a write start address and write command in each drive unit (disk drive 609, HDD unit 700, and the like). Also, the MPU 604 makes the initial setups of the formatter 619 (setups of divisions of cells (CELL), video object units (VOBU), programs (PG), and a program chain (PGC)), and so forth. After the initial setup process, the MPU 604 executes a video recording start setup process (ST510). In this video recording start setup process, the MPU 604 sets a video recording start command in the encoder unit 601, and registers the separation information (divisions set in ST508) as video objects (VOB).

After the beginning of video recording, if data for a recording start size (e.g., one ECC block or more) have been stored in the FIFO unit 610a (YES in ST512), the MPU 604 determines a write address and write length in the disk drive unit 609 (or HDD unit 700), and issues a write command to the disk drive unit 609 (or HDD unit 700) (ST514). Upon detection of a fetching interrupt of separation information (YES in ST516), the MPU 604 fetches separation information from the formatter 619 (ST518).

In other words, if the FIFO buffer of the FIFO unit 610a has stored a given size (for one or more ECC blocks or one continuous data area CDA) of data of a program stream (PS) fetched in the encoder unit 601 (YES in ST512), the stored data is recorded on the disk 100 (or HDD unit 700). At this time, the separation information of the recorded data is fetched in the work RAM 604a as needed (ST518).

If any write error to the disk 100 (or HDD unit 700) has occurred during write access (video recording) that has started in response to the write command issued in ST514 (YES in ST521), the MPU 604 temporarily saves address information where recording is underway in the work RAM 604a (ST523), and then starts a FIFO & recording start size control process (ST525). The address information temporarily saved in the work RAM 604a can be recorded in a volume & file management information area (see the first column b in FIG. 8) in the disk 100 as needed after the end of recording. If no write error has occurred (NO in ST521), the MPU 604 skips the process in ST523, and starts a FIFO & recording start size control process (ST525).

While video recording continues (NO in ST527), the processes in ST512 to ST527 are repeated. If a video recording end key input is detected, and video recording comes to an end (YES in ST527), the MPU 604 executes a video recording end process (not shown). In this video recording end process, the MPU 604 can fetch and initialize the remaining separation information from the formatter 619, and can write the setups of program chain information (PGCI) (separation information, I-picture information, and the like) in management information VMG. In other words, the MPU 604 fetches the remaining separation information in the work RAM 604a, and can update the contents of the management information VMG on the basis of the fetched separation information.

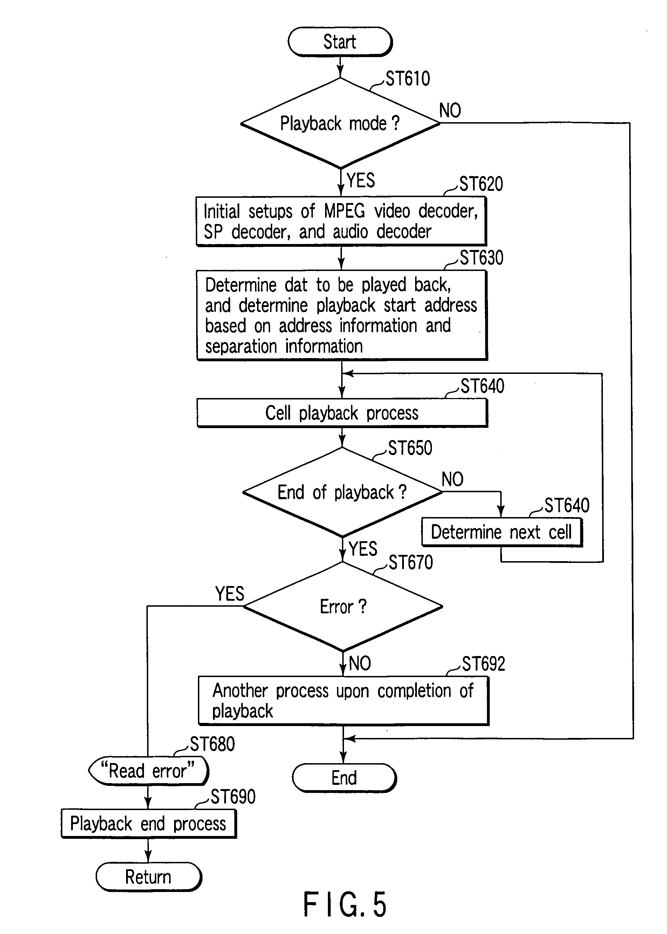

FIG. 5 is a flow chart for explaining processes executed when the digitally recorded video information is played back by the apparatus shown in FIG. 1. The following description will be given under the assumption that video information is normally recorded on the disk 100 loaded in the disk drive unit 609 (the same applies to playback from the HDD unit 700).

It is checked if the current mode is a playback mode (ST610). If the current mode is not a playback mode (NO in ST610), the process in FIG. 5 ends. If the current mode is a playback mode (YES in ST610), the MPU 604 executes initial setups of the MPEG video decoder 628, sub-picture (SP) decoder 627, and audio decoder 630 (ST620).

Upon completion of the initial setups, the MPU 604 determines data to be played back on the basis of, e.g., the playback time of user's choice, and determines a playback start address on the basis of address information and separation information corresponding to the determined data (ST630). After the playback start address is determined, the MPU 604 executes a cell playback process (ST640). During playback (NO in ST650), the MPU 604 executes the cell playback process (ST640) while determining the next cell to be played back (ST660).

Upon completion of cell playback (YES in ST650), the MPU 604 executes an error check process (ST670). If any error has occurred upon completion of playback (YES in ST670), the MPU 604 displays a message "read error has occurred" on the display unit 608 and/or TV 637 (ST680), and executes a playback end process (ST690). The control then returns to another process state (e.g., a key input wait state in ST20 in FIG. 2). If no error has occurred (NO in ST670), the MPU 604 executes another process upon completion of playback (ST692), thus ending the playback process in FIG. 5.

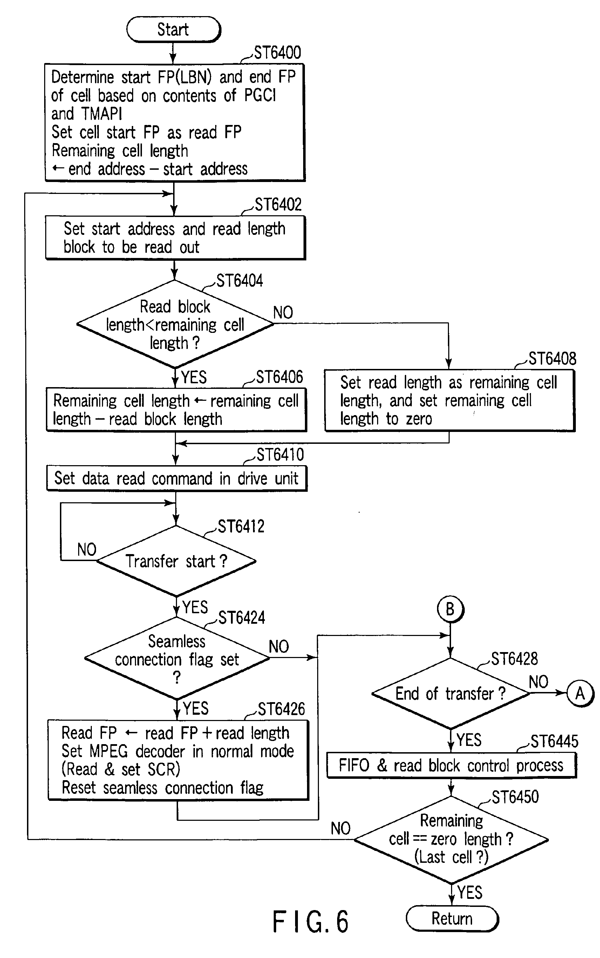

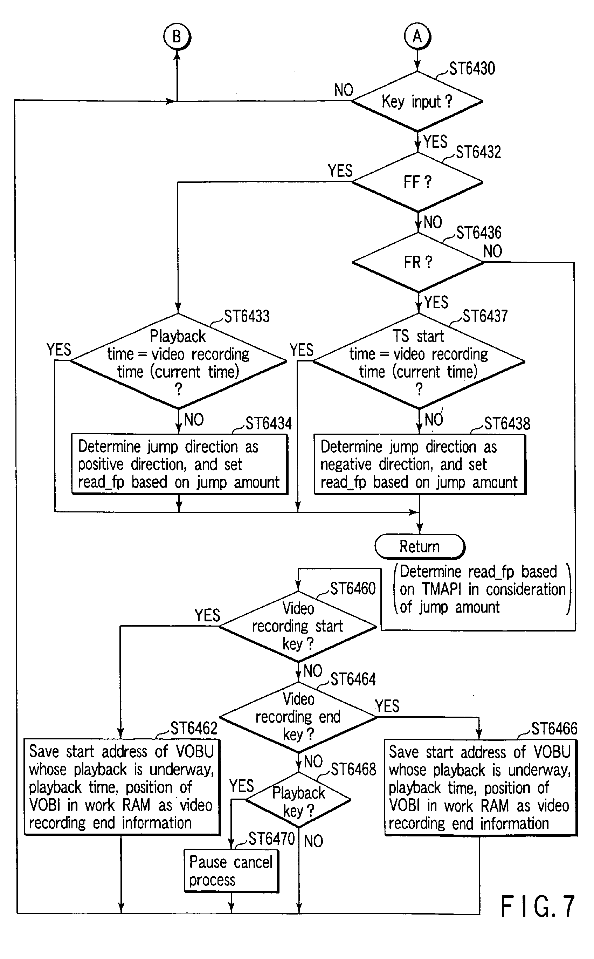

FIG. 6 is a flow chart for explaining the contents of the cell playback process (ST640) in the process in FIG. 5. FIG. 7 is a flow chart for explaining the remaining steps of the process in FIG. 6. In ST6400 in FIG. 6 and the like, "FP" indicates the head position, and LBN indicates the logical block number. For example, the start FP(LBN) of a playback designates the head position of a cell from which playback is to start using the logical block number.

The MPU 604 determines the start FP(LBN) and end FP(LBN) of a cell to be played back on the basis of program chain information PGCI and time map information TMAPI contained in the management information VMG, and sets the cell start FP as the read FP and "end address - start address" as a remaining cell length (ST6400). The MPU 604 sets the start address and read length of a data block (continuous data area CDA) to be read out (ST6402). If the read block length is shorter than the remaining cell length (YES in ST6404), the MPU 604 sets "remaining cell length - read block length) as the remaining cell length (ST6406). On the other hand, if the read block length is equal to or longer than the remaining cell length (NO in ST6404), the MPU 604 sets the read block length as the remaining cell length, and sets the remaining cell length to zero (ST6408).

Subsequently, the MPU 604 sets a data read command in the disk drive unit 609 (ST6410), and waits for the start of transfer of data to be read out. If transfer starts (YES in ST6412), the MPU 604 waits until data to be read out for one VOBU or more are stored in the FIFO buffer. If data for one VOBU or more is stored in the FIFO buffer, the MPU 604 reads data for one VOBU from this buffer, and checks packs which form this VOBU.

If a seamless connection flag (not shown) is set in the read VOBU data (YES in ST6424), the MPU 604 sets "read FP + read length" as the read FP, sets the MPEG decoder in a normal mode, appropriately reads and sets a system clock reference SCR, and resets the seamless connection flag (ST6426).

Upon completion of transfer that has started in ST6412 (YES in ST6428), it is checked if the next process is to start. If the next process is to start, the control enters a FIFO & read block control process (ST6445).

After the FIFO & read block control process (ST6445), if the remaining cell length becomes zero (YES in ST6450), since the cell has reached its end, the processes shown in FIGS. 6 and 7 end, and the control returns to ST650 in FIG. 5. If the remaining cell length is not zero (NO in ST6450), the flow returns to ST6402 to repeat the processes shown in FIGS. 6 and 7.

If transfer that has started in ST6412 is not complete (NO in ST6428), a key input is detected in ST20 in FIG. 2 (YES in ST6430 in FIG. 7), and a special playback mode is fast-forward (FF) (YES in ST6432), the MPU 604 compares the playback time with the video recording time (current time) (ST6433). If the playback time is different from the video recording time (NO in ST6433), the MPU 604 determines the jump direction of fast-forward as the positive direction, and sets a read position read_fp in accordance with a jump amount (ST6434). If the playback time matches the video recording time (YES in ST6433), the MPU 604 skips ST6434.

On the other hand, if the special playback mode is not FF but fast-reverse (FR) (NO in ST6432, YES in ST6436), the MPU 604 compares the start time with the video recording time (current time) (ST6437). If the start playback time is different from the video recording time (NO in ST6437), the MPU 604 determines the jump direction of fast-reverse as the negative direction, and sets a read position read_fp in accordance with a jump amount (ST6438). If the start time matches the video recording time (YES in ST6437), the MPU 604 skips ST6438.

After the read position read_fp upon FF or FR is set in this way, the MPU 604 executes a process for a read block (continuous data area CDA) upon special playback (FF or FR), and the control returns to ST650 in FIG. 5.

In the read block process, the read position read_fp can be determined based on the time map information TMAPI quoted in ST6400 in FIG. 6 in consideration of the jump amount (the contents of TMAPI will be explained later with reference to FIG. 8).

If no key input is detected (NO in ST6430) in the process of FIG. 7, the flow returns to ST6428 in FIG. 6. If a key input is detected and is neither the FF key nor the FR key (NO in ST6432, NO in ST6436), it is checked if the input key is a video recording start key (ST6460).

If the input key is a video recording start key (during the cell playback process) (YES in ST6460), the MPU 604 saves the start address of a VOBU whose playback is underway, playback time, VOBI position (in the work RAM 604a in FIG. 1) (in the work RAM 604a) as video recording start information (ST6462), and the flow returns to ST6428 in FIG. 6.

If the input key is not the video recording start key (NO in ST6460) but a video recording end key (YES in ST6464) during the playback process, the MPU 604 saves the start address of a VOBU whose playback is underway, playback time, VOBI position (in the work RAM 604a in FIG. 1) (in the work RAM 604a) as video recording end information (ST6462), and the flow returns to ST6428 in FIG. 6.

If the input key is neither the video recording start key (NO in ST6460) nor the video recording end key (NO in ST6464) during the playback process, but is a playback key (YES in ST6468), the MPU 604 cancels a pause state and starts the operation of the system time clock STC (ST6470). The flow then returns to ST6428 in FIG. 6.

If the input key is none of the video recording start key (NO in ST6460), video recording end key (NO in ST6464), and playback key (NO in ST6468) during the playback process, the flow directly returns to ST6428 in FIG. 6.

In the write control or read control with respect to the FIFO buffer in the FIFO unit 610a in FIG. 1, the following control is done while monitoring the FIFO remaining size to satisfy predetermined "FIFO conditions", so as to allow "playback while executing seamless recording".

### (1) During video recording process

If the FIFO buffer remaining size on the video recording side becomes equal to or larger than a predetermined value (e.g., 75%), a write size per access to the drive is increased (by each ECC block = 16 or 32 sectors), the number of write accesses to the drive (per unit time) is increased, or the data size to be buffered in the recording FIFO is increased (by each ECC block). In this case, in order to prevent FIFO overflow, the write size per access to the drive is increased. In other words, the read size from this FIFO is increased.

### (2) During playback process

If the remaining size of the FIFO buffer on the playback side becomes equal to or smaller than a predetermined value (e.g., 25%), the read size per access from the drive is increased (by each ECC block), or the number of read accesses (per unit time) is increased. In other words, the write size to this FIFO is increased.

### (3) When video recording process overlaps playback process

The video recording process is preferentially done.

Note that the following two conditions can be adopted as the predetermined "FIFO conditions".
(A) Inhibit the video recording FIFO from overflowing.
(B) Inhibit the playback FIFO from being empty.

The input/output rate with respect to the FIFO buffer can have the following characteristics.
(a) The input rate of the video recording FIFO depends on the transfer rate (variable rate) from the MPEG encoder, and the output rate of the video recording FIFO depends on the transfer rate to the drive.
(b) The input rate of the playback FIFO depends on the transfer rate from the drive, and the output rate of the playback FIFO depends on the transfer rate to the decoder.

FIG. 8 is a view for explaining the contents of the management information (RTR_VMG) recorded by the apparatus shown in FIG. 1. A case will be exemplified below wherein volume space information shown in the first column b in FIG. 8 is recorded in an information recording area of a DVD-RAM disk 100 in FIG. 8 (information to be recorded in the HDD unit 700 can have the same data structure).

As shown in the first column b in FIG. 8, the volume space of the disk 100 contains a volume & file management information recording area, and a data area that records user data (AV information and the like). This data area can record management information RTR_VMG and the contents (video objects VOB and the like that form AV information) of user data, as shown in the second column c in FIG. 8. The management information RTR_VMG is stored as a file of a video manager VMG.

The management information RTR_VMG contains RTR video manager information RTR_VMGI, a movie AV file information table M_AVFIT, a still picture AV file information table S_AVFIT, original program chain information ORG_PGCI, a user-defined program chain information table UD_PGCIT, a text data manager TXTDT_MG, and manufacturer information MNFIT, as shown in the third column d in FIG. 8.

Note that the program chain information PGCI is a data structure which represents the whole playback control of a program chain PGC, which indicates a series of programs PG (program set). Each PG is a logical unit of the recording contents, and is recognized or defined by the user. The PG in the program set is formed of one or more original cells (playback unit of the first video recording contents), and is defined in only the ORG_PGCI. In other words, the ORG_PGCI is information that describes the cell playback order of the first video recording contents. Also, the UD_PCGIT is a table that describes one or more pieces of PGCI edited by the user after video recording.

The M_AVFIT contains movie AV file information table information M_AVFITI, one or more pieces of movie VOB stream information M_VOB_STI#1 to M_VOB_STI#n, and movie AV file information M_AVFI, as shown in the fourth column e in FIG. 8. The M_AVFI contains movie AV file information general information M_AVFI_GI, one or more movie VOB information search pointers M_VOBI_SRP#1 to M_VOBI_SRP#n, and a plurality of pieces of movie VOB information M_VOBI#1 to M_VOBI#n corresponding in number to these search pointers, as shown in the fifth column f in FIG. 8.

Each M_VOBI# contains movie VOB general information M_VOBI_GI, seamless information SMLI, audio gap information AGAPI, and time map information TMAPI, as shown in the sixth column g in FIG. 8. This TMAPI is used upon executing special playback (e.g., cell playback in an order unique to each user using the user-defined PGC), and time search.

The TMAPI contains time map generation information TMAP_GI, one or more time entries TM_ENT#1 to TM_ENT#r, and one or more VOBU entries VOBU_ENT#1 to VOBU_ENT#q, as indicated by the seventh column h in FIG. 8.

Each TM_ENT contains VOBU_ENTN which indicates the number of the corresponding VOBU entry, TM_DIFF which indicates the time difference between the playback start time of VOBU designated by the time entry and the calculated playback time, and VOBU_ADR which indicates a target VOBU address, as shown in the left part i in the eighth column of FIG. 8. If a time unit TMU is expressed by 600 fields in NTSC (or if the time unit TMU is expressed by 500 fields in PAL), the "calculated playback time" for time entry #j can be given by TMU × (j - 1) + TM_OSF. The VOBU_ADR expresses the target VOBU address by the total size of preceding VOBUs of the VOB of interest if the VOBU size is expressed by sectors.

In the above data structure, upon starting playback from the middle of a given VOBU, that access point must be settled. This access point is defined as a time entry point. This time entry point is separated the time difference indicated by time difference information TM_DIFF in the time entry TM_ENT from the position indicated by the VOBU movie address information. The time entry point serves as a special playback start point (or time search point) indicated by the time map information TMAPI.

Each VOBU entry contains reference picture size information 1STREF_SZ, VOBU playback time information VOBU_PB_TM, and VOBU size information VOBU_SZ, as shown in the right part j of the eighth column of FIG. 8. Note that the VOBU_PB_TM represents the playback time of the VOBU of interest by the number of video fields. Also, the reference picture size information 1STREF_SZ expresses the size of the first reference picture (corresponding to I-picture of MPEG) in the VOBU of interest by the number of sectors.

Normally, in the VOBU entry, the "VOBU time interval" is expressed by the number fields. As another method, the "VOBU time interval" can be expressed using a "count value of a clock counter from a given VOBU to the next VOBU". More specifically, the "VOBU time interval" can be expressed by the "difference between the value of a presentation time stamp PTS at the head position of one VOBU and that at the head position of the next VOBU". In other words, "the difference between clock counter values in a specific unit can represent the time interval in that unit".

A replace process in the digital video recording/playback apparatus shown in FIG. 1 will be explained below.

First, a replace process executed when AV data is continuously recorded based on an AV write command will be described. An AV write command is used to command continuous recording of, e.g., AV data, and gives greater importance to data continuity than data reliability. A rewrite time that can be set upon continuous recording corresponding to this AV write command is limited to a very short time. On the other hand, a PC write command is used to command recording of, e.g., PC data, and gives greater importance to dataa reliability than data continuity. A rewrite time upon. recording corresponding to this PC write command is longer than that of the AV write command. This digitall video recording/playback apparatus can attain both dataa continuity and reliability upon recording AV data basedd on the AV write command, by utilizing both the features, i.e., the continuity assured by the AV write command and reliability assured by the PC write command. The main MPU 604 of the digital video recording/playback apparatus issues various commands, such as an AV write command, AV read command, PC write command, and the like to respective units. The main MPU 604 executes a replace process by controlling the operations of the respective units.

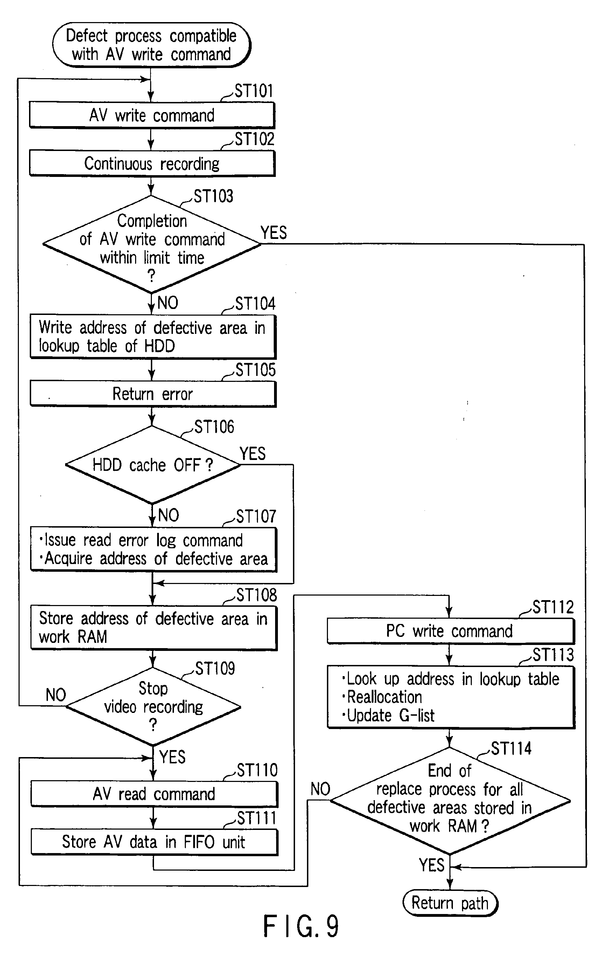

FIG. 9 is a flow chart for explaining a defect process compatible with the AV write command. As shownn in FIG. 9, assume that AV data is continuously recordedd in the HDD unit 700 on the basis of the AV write command (ST101, ST102). If an error has occurred during this continuous recording (NO in ST103), an error-occurrence area (defective area) and its logical sector address (LBA) are stored in a lookup table in the HDD unit 700 (ST104), and an error is returned (ST105).

If the HDD unit 700 does not use any cache (YES inn ST106), a message indicating that a sector error has occurred within a range designated by the AV write command is sent upon completion of transfer of that AV write command. An address upon issuance of the AV write command is stored in the work RAM 604a (ST108). By contrast, if the HDD unit 700 uses a cache (NO in ST106), an AV write command for another sector has already been issued when an error occurs upon accessing the HDD unit 700, so the logical sector address of the error-occurrence area (defective area) cannot be specified. Hence, a read error log command is issued upon completion of AV write, and the logical sector address of the error-occurrence area (defective area) is acquired (ST107). The acquired logical sector address is stored in a memory on the Host side. That is, the address is stored in the work RAM 604a (ST108).

Upon completion of continuous recording based on the AV write command (YES in ST109), AV data is read out from the error-occurrence area (defective area) by an AV read command to continuously play back data (ST110), and the readout AV data is stored in a memory on the Host side. That is, the readout AV data is stored in the FIFO unit 610a (ST111). Based on a PC write command to record data with a replace process upon recording data on the error-occurrence area (defective area), AV data read out by-the AV read command is written in the error-occurrence area (defective area) (ST112). The lookup table in the HDD unit 700 stores the logical sector address of the error-occurrence area (defective area). When this logical sector address matches that which is designated by the PC write command, sectors are reallocated. That is, link data between the logical sector address of the error-occurrence area (defective area) and a logical sector address of a replace destination is registered in a G (grown)-list (ST113). As a result, the next access to the logical sector address of the error-occurrence area (defective area) that has already been registered in the G-list is considered as access to a logical sector address as the replace destination of that of the error-occurrence area (defective area). That is, if the AV write command is to write data at the logical sector address of the error-occurrence area (defective area), data is written at the logical sector address as the replace destination of that of the error-occurrence area (defective area). As a consequence, a defective sector can be avoided, thus preventing recurrence of an error. The processes in ST110 to ST113 are repeated for the addresses of all defective areas stored in the work RAM 604a (since the FIFO unit 610a has a finite size), thus implementing the replace process (ST114).

Second, a replace process executed when AV data is to be continuously played back on the basis of an AV read command will be explained. This digital video recording/playback apparatus can attain both data continuity and reliability upon playing back AV data based on the AV read command, by utilizing both the features, i.e., the continuity assured by the AV read command and reliability assured by the PC write command. The main MPU 604 of the digital video recording/playback apparatus issues various commands such as an AV write command, AV read command, PC write command, and the like to respective units. The main MPU 604 executes a replace process by controlling the operations of the respective units.

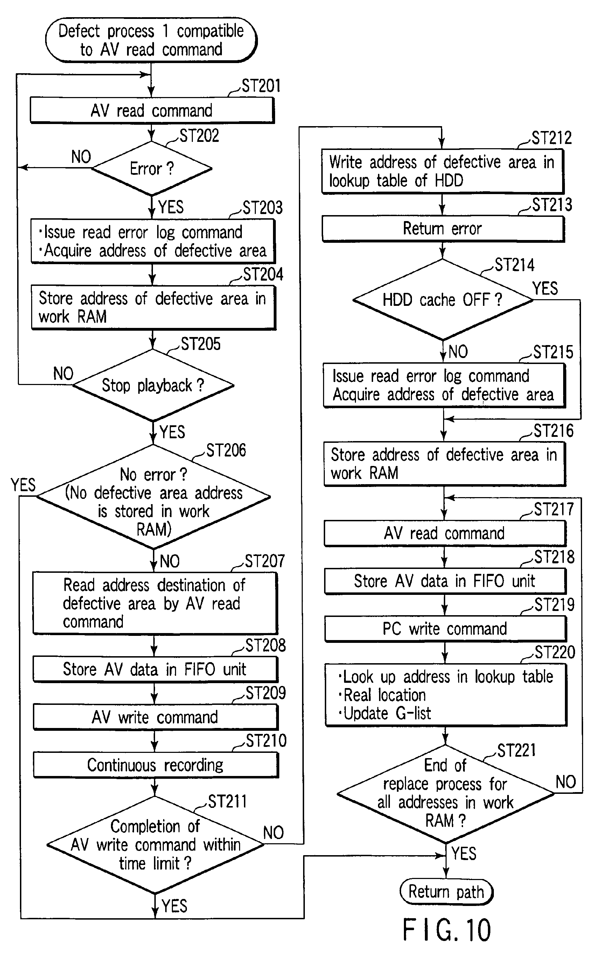

FIG. 10 is a flow chart for explaining defect process 1 compatible with an AV read command. Defect process 1 compatible with an AV read command is executed in a case wherein no logical sector address of an error-occurrence area (defective area) is left in the lookup table of the HDD unit 700 upon playing back AV data based on an AV read command. In such a case, AV data is written in the error-occurrence area (defective area) by an AV write command to generate a deliberate error, thereby storing the logical sector address of the error-occurrence area (defective area) . in the lookup table of the HDD unit 700.

As shown in FIG. 10, assume that AV data is continuously played back from the HDD unit 700 on the basis of an AV read command (ST201). If an error has occurred during this continuous playback (YES in ST202), a read error log command is issued to acquire the logical sector address of an error-occurrence area (defective area) (ST203). The acquired logical sector address is stored in a memory on the Host side. That is, the acquired address is stored in the work RAM 604a (ST204). Note that the process in ST203 may be omitted.

If an error is found (NO in ST206) upon completion of continuous playback based on the AV read command (YES in ST205), AV data is read out again from the error-occurrence area (defective area) by the AV read command (ST207), and the readout AV data is stored in a memory on the Host side. That is, the readout AV data is stored in the FIFO unit 610a (ST208).

Subsequently, the readout AV data is recorded on the error-occurrence area (defective area) (ST210) by an AV write command (ST209). In this case, an error occurs during recording (NO in ST211), the logical sector address (LBA) of the error-occurrence area (defective area) is stored in the lookup table in the HDD unit 700 (ST212), and an error is returned (ST213).

If the HDD unit 700 does not use any cache (YES in ST214), a message indicating that a sector error has occurred within a range designated by the AV write command is sent, upon completion of transfer of that AV write command. An address upon issuance of the AV write command is stored in the work RAM 604a (ST216). By contrast, if the HDD unit 700 uses a cache (NO in ST214), an AV write command for another sector has already been issued when an error occurs upon accessing the HDD unit 700, so the logical sector address of the error-occurrence area (defective area) cannot be specified. Hence, a read error log command is issued upon completion of AV write, and the logical sector address of the error-occurrence area (defective area) is acquired (ST215). The acquired logical sector address is stored in a memory on the Host side. That is, the address is stored in the work RAM 604a (ST216).

Then, AV data is read out from the error-occurrence area (defective area) by an AV read command (ST217), and the readout AV data is stored in a memory on the Host side. That is, the readout AV data is stored in the FIFO unit 610a (ST218). In this case, the AV data read out by the AV read command is written in the error-occurrence area (defective area) by a PC write command (ST219). The lookup table in the HDD unit 700 stores the logical sector address of the error-occurrence area (defective area). When this logical sector address matches that which is designated by the PC write command, sectors are reallocated. That is, link data between the logical sector address of the error-occurrence area (defective area) and a logical sector address of a replace destination is registered in a G (grown)-list (ST220). As a result, the next access to the logical sector address of the error-occurrence area (defective area) that has already been registered in the G-list is considered as access to a logical sector address as the replace destination of that of the error-occurrence area (defective area). That is, if the AV write command is to write data at the logical sector address of the error-occurrence area (defective area), data is written at the logical sector address as the replace destination of that of the error-occurrence area (defective area). As a consequence, a defective sector can be avoided, thus preventing recurrence of an error. The processes in ST217 to ST220 are repeated for the addresses of all defective areas stored in the work RAM 604a (since the FIFO unit 610a has a finite size), thus implementing the replace process (ST221).

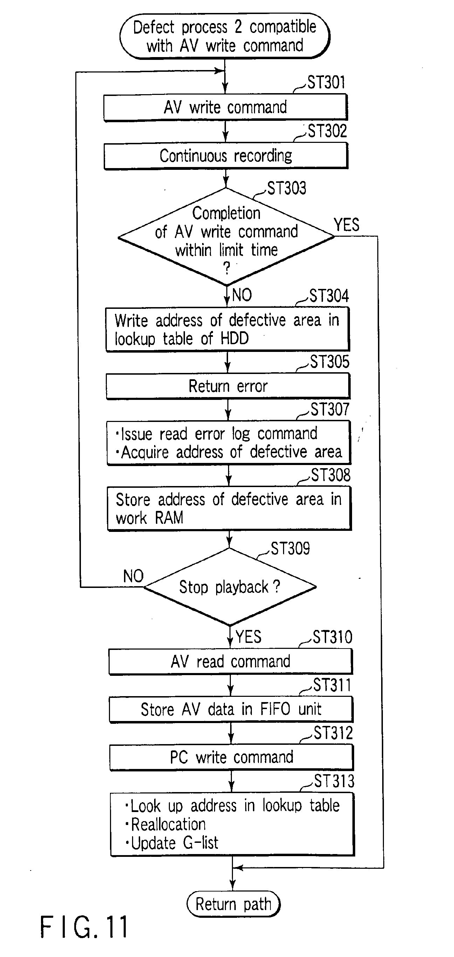

FIG. 11 is a flow chart for explaining defect process 2 compatible to an AV read command. Defect process 2 is executed in a case wherein the logical sector address of an error-occurrence area (defective area) is left in the lookup table of the HDD unit 700 upon playing back AV data based on an AV read command. In such case, unlike in defect process 1 that has been explained using FIG. 10, the need for writing AV data in the error-occurrence area (defective area)by the AV write command can be obviated.

As shown in FIG. 11, assume that AV data is continuously played back from the HDD unit 700 on the basis of an AV read command (ST301, ST302). If an error has occurred during this continuous playback (NO in ST303), the logical sector address (LBA) of an error-occurrence area (defective area) is stored in the lookup table in the HDD unit 700 (ST304), and an error is returned (ST305). Subsequently, a read error log command is issued to acquire the logical sector address of the error-occurrence area (defective area) (ST307). The acquired logical sector address is stored in a memory on the Host side. That is, the acquired address is stored in the work RAM 604a (ST308).

Upon completion of continuous playback (YES in ST309), AV data is read out from the error-occurrence area (defective area) by an AV read command to continuously play back data (ST310), and the readout AV data is stored in a memory on the Host side. That is, the readout AV data is stored in the FIFO unit 610a (ST311). Then, the readout AV data is recorded on the error-occurrence area (defective area) by a PC write command (ST312). The lookup table in the HDD unit 700 stores the logical sector address of the error-occurrence area (defective area). When this logical sector address matches that which is designated by the PC write command, sectors are reallocated. That is, link data between the logical sector address of the error-occurrence area (defective area) and a logical sector address of a replace destination is registered in a G (grown)-list (ST313). As a result, the next access to the logical sector address of the error-occurrence area (defective area) that has already been registered in the G-list is considered as access to a logical sector address as the replace destination of that of the error-occurrence area (defective area). That is, if the AV write command to write data at the logical sector address of the error-occurrence area (defective area), data is written at the logical sector address as the replace destination of that of the error-occurrence area (defective area). As a consequence, a defective sector can be avoided, thus preventing recurrence of an error.

The effects of the replace process explained using FIGS. 9 to 11 will be described in more detail. Even when an error has occurred upon reading/writing moving image/audio data, data reliability is sacrificed to some extent so as to preferentially assure data continuity. In order to assure data reliability, moving image/audio data during retrial may be stored in a buffer memory so as to assure data reliability in addition to data continuity. However, a large-capacity buffer memory is required, resulting in an increase in cost of the apparatus.

According to the digital video recording/playback apparatus of the present invention, both data continuity and reliability can be achieved without requiring any large-capacity buffer memory for the aforementioned purpose. More specifically, AV data is written by an AV write command, the retrial time of which is limited, and a replace process is executed for a medium defect which has occurred during AV write by a PC write command, after completion of AV write. In this manner, no AV data is written in the defective area from the next access. Likewise, AV data is read out by an AV read command, the retrial time of which is limited, and a replace process is executed for a medium defect which has occurred during AV read by a PC write command, after completion of AV read. In this way, no AV data is written in the defective area from the next access.

## Claims

1. A replace processing method for replacing a defective area by another area, **characterized by** comprising:
storing (ST104, ST204, ST304), when an error occurs due to an influence of the defective area while data is continuously processed by a predetermined command to have a predetermined recording destination as a target, storing an address of the defective area; and
replacing (ST113, ST220, ST313) the defective area with another area, upon completion of the continuous data process corresponding to the predetermined command.

2. A method according to claim 1, **characterized in that** an AV write command is a command to continuously record data, and
the method further comprises:
storing (ST104), when data is continuously recorded in the predetermined recording destination by the AV write command, and an error occurs due to an influence of the defective region during continuous recording, the address of the defective area; and
replacing (ST113) the defective area with another area upon completion of data recording corresponding to the AV write command.

3. A method according to claim 2, **characterized in that** an AV read command is a command to continuously play back data,
a PC write command is a command to record data while executing a replace process as needed, and
the method further comprises:
executing (ST113) the replace process by reading out data from the defective area by the AV read command upon completion of data recording corresponding to the AV write command, and recording the data, which is read out by the AV read command, in the defective area by the PC write command upon data recording to the defective area.

4. A method according to claim 1, **characterized in that** an AV read command is a command to continuously play back data, and
the method further comprises:
storing (ST204, ST304), when data is continuously played back from the predetermined recording destination by the AV read command, and an error occurs due to an influence of the defective region during continuous playback, the address of the defective area; and
replacing (ST220, ST313) the defective area with another area upon completion of the continuous playback corresponding to the AV read command.

5. A method according to claim 4, **characterized in that** a PC write command is a command to record data while executing a replace process as needed, and
the method further comprises:
executing (ST220, ST313) the replace process by reading out data from the defective area again by the AV read command upon completion of data playback corresponding to the AV read command, and recording the data, which is read out by the AV read command, in the defective area by the PC write command upon data recording to the defective area.

6. A method according to claim 4, **characterized in that** an AV write command is a command to continuously record data,
a PC write command is a command to record data while executing a replace process as needed, and
the method further comprises:
executing (ST220, ST313) the replace process by reading out data from the defective area again by the AV read command upon completion of data playback corresponding to the AV read command, recording the data, which is read out by the AV read command, in the defective area by the PC write command, reading out data from the defective area again by the AV read command, and recording the data, which is read out by the AV read command, in the defective area by the PC write command upon data recording to the defective area.

7. A method according to claim 1, **characterized in that** a drive that records data in the recording destination, and the recording destination, store the address indicating the defective area.

8. A replace processing apparatus for executing a replace process in correspondence with an error, **characterized by** comprising:
a processing unit (604, 700) configured to process data by a predetermined command to have a predetermined recording destination as a target;
a storage unit (604a, 700) configured to store, when an error occurs due to an influence of the defective area during the data process of the processing unit, an address of the defective area; and
a replace process unit (604, 700) configured to replace the defective area with another area upon completion of the data process corresponding to the predetermined command.

9. An apparatus according to claim 8, **characterized in that** the processing unit includes a recording unit (6047) configured to continuously record data in the predetermined recording destination by an AV write command to continuously record data,
the storage unit stores the address of the defective area when an error occurs due to an influence of the defective region during continuous recording of data by the recording unit, and
the replace process unit replaces the defective area with another area upon completion of data recording corresponding to the AV write command.

10. An apparatus according to claim 9, **characterized in that** an AV read command is a command to continuously play back data,
a PC write command is a command to record data while executing a replace process as needed, and
the replace process unit executes the replace process by reading out data from the defective area by the AV read command upon completion of data recording corresponding to the AV write command, and recording the data, which is read out by the AV read command, in the defective area by the PC write command upon data recording to the defective area.

11. An apparatus according to claim 8, **characterized in that** the processing unit includes a playback unit (6046) configured to continuously play back data from the predetermined recording destination by an AV read command to continuously play back data,
the storage unit stores the address of the defective area when an error occurs due to an influence of the defective region during continuous playback of data by the playback unit, and
the replace process unit replaces the defective area with another area upon completion of the continuous playback corresponding to the AV read command.

12. An apparatus according to claim 11, **characterized in that** a PC write command is a command to record data while executing a replace process as needed, and
the replace process unit executes the replace process by reading out data from the defective area again by the AV read command upon completion of data playback corresponding to the AV read command, and recording the data, which is read out by the AV read command, in the defective area by the PC write command upon data recording to the defective area.

13. An apparatus according to claim 11,
**characterized in that** an AV write command is a command to continuously record data,
a PC write command is a command to record data while executing a replace process as needed, and
the replace process unit executes the replace process by reading out data from the defective area again by the AV read command upon completion of data playback corresponding to the AV read command, recording the data, which is read out by the AV read command, in the defective area by the PC write command, reading out data from the defective area again by the AV read command, and recording the data, which is read out by the AV read command, in the defective area by the PC write command upon data recording to the defective area.

14. An apparatus according to claim 8, **characterized in that** the recording destination stores the address indicating the defective area in addition to storage of the address indicating the defective area by the storage unit.
